# EUROPÄISCHE PATENTSCHRIFT

(11) **EP 2 913 304 B1**
(45) Veröffentlichungstag und Bekanntmachung des Hinweises auf die Patenterteilung: **02.04.2025**
(21) Anmeldenummer: 15154292.5
(22) Anmeldetag: 09.02.2015
(51) Int. Cl.: C02F 1/00, B01J 47/024, H04L 12/28, B01J 39/07, C02F 1/42, C02F 1/68

(54) **Vorrichtung zur Aufbereitung von Wasser**
Device for processing water
Dispositif destiné à la préparation d'eau

(30) Priorität: 27.02.2014 DE 102014102583
(43) Veröffentlichungstag der Anmeldung: 02.09.2015
(73) Patentinhaber: BWT Holding GmbH, 5310 Mondsee (AT)
(72) Erfinder: Gee, Chris, Old Park Devizes, SN105JP (GB)
(74) Vertreter: Friderichs, Gunther

(56) Entgegenhaltungen:
- WO-A1-2013/166069
- US-A1- 2006 060 512
- US-A1- 2012 000 858
- US-A1- 2012 179 519

## Beschreibung

### Gebiet der Erfindung

Die Erfindung betrifft ein System zur Aufbereitung von Wasser, wie diese insbesondere im Haushalt Verwendung findet.

### Hintergrund der Erfindung

Vorrichtungen zur Aufbereitung von Wasser im Haushalt sind aus der Praxis bekannt.

In der Regel umfasst eine derartige Vorrichtung eine Kanne zur Aufbereitung von Trinkwasser. In einen Trichter, der in die Kanne eingesetzt ist, ist eine Kartusche mit einem Ionenaustauschermaterial eingesetzt. Das eingefüllte Wasser passiert die Kartusche. Dabei wird in der Regel zumindest die Karbonathärte durch das Ionenaustauschermaterial gesenkt. Das Filtermaterial der Kartusche enthält vielfach neben einem Ionenaustauschermaterial auch andere Bestandteile, etwa zur Entfernung von Keimen, wie beispielsweise Silber, oder von Chlor und geschmackstörenden Stoffe, wie beispielsweise Aktivkohle.

Derartige Vorrichtungen sind in der Regel derart ausgebildet, dass das aufzubereitende Wasser aufgrund seiner Schwerkraft die Kartusche passiert. Weiter handelt es sich zumeist um Einwegsysteme, d.h. das Ionenaustauschermaterial der Kartusche wird nicht aufbereitet, sondern die gesamte Kartusche wird ausgetauscht.

Weiter sind aus der Praxis Zähleinrichtungen bekannt, die dem Benutzer einen notwendigen Kartuschenaustausch signalisieren. Da eine unmittelbare Messung der gefilterten Wassermenge aufwendig ist, werden zumeist andere Parameter herangezogen, um einen notwendigen Austausch der Kartusche zu signalisieren. So kann ein notwendiger Austausch beispielsweise zeitbasiert erfolgen. Eine andere Methode ist es, die Zahl der Öffnungsvorgänge eines Schließelementes, welches zum Wassereinleiten geöffnet werden muss, als Maß für die aufbereitete Wassermenge heranzuziehen.

Derartige Zähleinrichtungen sind häufig als Elektronikmodul ausgebildet, welche sich in einem Deckel der als Kanne ausgebildeten Wasseraufbereitungsvorrichtung befindet. Nachteilig bei bekannten Zähleinrichtungen ist, dass der Benutzer vielfach gar nicht mitbekommt, dass ein notwendiger Austausch signalisiert wird, oder dass der Benutzer, wenn er keine neue Kartusche zur Hand hat, die Zähleinrichtung manuell zurücksetzt, ohne eine neue Kartusche einzusetzen.

Das Dokument US 2012/0179519 A1 zeigt eine Wasserfiltervorrichtung mit einer Filterkartusche, die in ein System eingebunden ist, welches u.a. die durchgeflossene Wassermenge, die Lebensdauer der Filterkartusche etc. anzeigen kann.

Das Dokument US 2013/0083884 A1 zeigt einen Tischwasserfilter mit einer Zähleinrichtung, welche auf einen notwendigen Wechsel der Filterkartusche aufmerksam macht.

Das Dokument WO 2013/166069 A1 zeigt ein stationäres Filtersystem und beschreibt u.a. die Verwendung eines Smartphones, um die Lebensdauer der Filterkartusche an die örtlichen Gegebenheiten anzupassen.

Das Dokument US 2012/0000858 A1 zeigt ein Verfahren zur Überwachung der Lebensdauer einer Filterkartusche über ein Netzwerk. Das Dokument US 2006/0060512 A1 zeigt eine stationär eingesetzte Filterkartusche, deren Lebensdauer über eine Drahtlos-Verbindung überwacht wird.

### Aufgabe der Erfindung

Der Erfindung liegt demgegenüber die Aufgabe zugrunde, das Signalisieren eines erforderlichen Austausches für den Benutzer komfortabler zu gestalten.

### Zusammenfassung der Erfindung

Die Erfindung wird bereits durch ein System zur Aufbereitung von Wasser nach Anspruch 1 gelöst.

Bevorzugte Ausführungsformen und Weiterbildungen der Erfindung sind dem Gegenstand der abhängigen Ansprüche zu entnehmen.

Die Erfindung umfasst eine Vorrichtung zur Aufbereitung von Wasser, welche als Kanne zur Verwendung im Haushalt ausgebildet ist. Eine derartige Kanne umfasst in der Regel einen Griff, einen Trichter zum Einsetzen der Filterpatrone sowie einen Ausguss zum Ausgießen von Wasser.

Zumeist umfasst die Vorrichtung zur Aufbereitung von Wasser einen Deckel mit einem Schließelement. Die Erfindung betrifft sowohl Vorrichtungen mit einem Schließelement, welches manuell vom Benutzer geöffnet wird, wie z.B. einen Schieber, als auch Schließelemente, die durch den Druck des einströmenden Wassers betätigt werden.

Die Vorrichtung umfasst des weiteren einen Wassersammelraum, welcher üblicherweise unterhalb eines Trichters angeordnet ist, sowie eine Filterpatrone, auch als "Kartusche" bezeichnet.

Insbesondere betrifft die Erfindung Filterpatronen mit einem Ionenaustauschermaterial, beispielsweise einem schwachsauren Ionenaustauscherharz. Es versteht sich, dass die Filterpatrone aber noch andere Bestandteile enthalten kann und dass beispielsweise auch Filterpatronen aus der Praxis bekannt sind, die Mineralstoffe und Spurenelemente, wie beispielsweise Magnesium, an das Trinkwasser abgeben.

Derartige Vorrichtungen werden insbesondere verwendet, um Wasser aufzubereiten, welches zur Zubereitung von Heißgetränken verwendet wird.

Denkbar ist aber auch, die Vorrichtung zur Erzeugung von zumindest teilweise demineralisiertem Wasser für Haushaltszwecke, wie beispielsweise zum Bügeln, zu verwenden. In diesem Fall kann beispielsweise eine Mischbettkartusche verwendet werden.

Die Vorrichtung weist eine Zähleinrichtung zur Anzeige eines erforderlichen Wechsels der Filterpatrone auf.

Unter einer Zähleinrichtung wird ein Elektronikmodul verstanden, welches einen erforderlichen Wechsel der Filterpatrone über eine mit dem Elektronikmodul verbundene Anzeige signalisiert.

Die Zähleinrichtung wirkt mit einem Timer, einer Einrichtung zum Zählen der aufbereiteten Wassermenge und/oder einem Schließelement zusammen. So kann beispielsweise die Zähleinrichtung rein zeitbasiert einen notwendigen Wechsel signalisieren, beispielsweise dass nach einem Monat Benutzung die Kartusche ihr Lebensende erreicht hat.

Weiter kann als Maß für einen notwendigen Wechsel das Öffnen und Schließen eines Schließelements herangezogen werden, da dieses in etwa mit der aufbereiteten Wassermenge korreliert.

Schließlich kann, auch wenn dies aufwendig ist, das eingeleitete Wasser über eine Einrichtung bestimmt werden, welche das Wasservolumen misst. Beispielsweise kann der Wasserspiegel in der Kanne mittels Ultraschall gemessen werden.

Weiter ist denkbar, über Elektroden die Leitfähigkeit des aufbereiteten Wassers zu messen und dieses als Maß für den notwendigen Austausch der Filterpatrone zu verwenden.

Es versteht sich, dass vorstehend genannte Methoden miteinander kombiniert werden können.

Gemäß der Erfindung weist die Zähleinrichtung Mittel zur drahtlosen Übertragung auf, mittels der eine Anzeige eines erforderlichen Wechsels der Filterpatrone auf einem tragbaren Computer, ausgebildet als ein Smartphone, darstellbar ist.

Durch die Erfindung wird auf einfache Weise ermöglicht, dass der Benutzer einen notwendigen Kartuschenaustausch auf einem drahtlosen Gerät dargestellt bekommt.

Bei Verwendung eines Smartphones kann der Benutzer mithin einen notwendigen Kartuschenaustausch nicht nur unmittelbar bei Benutzung der Vorrichtung, sondern bei Benutzung des Smartphones signalisiert bekommen.

So ist möglich, dass nach einmaliger Übertragung eines notwendigen Filterpatronenaustausches dies im tragbaren Computer gespeichert ist und der Benutzer einen notwendigen Filterpatronenaustausch auch dann signalisiert bekommt, wenn der tragbare Computer gerade nicht über eine drahtlose Verbindung mit der Zähleinrichtung verbunden ist.

Denkbar ist beispielsweise auch, auf dem drahtlosen Computer ein Programm zu installieren, welches beispielsweise mit einer Kalenderfunktion des drahtlosen Computers verbunden ist und einen bevorstehenden Filterpatronenaustausch schon vorher signalisiert.

Gemäß der Erfindung sind die Mittel zur drahtlosen Übertragung in einem Elektronikmodul integriert, welches auch die Anzeige eines erforderlichen Wechsels der Filterpatrone umfasst.

Dabei handelt es sich insbesondere um ein hermetisch verschlossenes Elektronikmodul.

Die drahtlosen Übertragungsmittel sind mithin in einem hermetisch verschlossenen Modul integriert, welches eine Zähleinrichtung typischerweise ohnehin aufweist.

Beispielsweise kann das Elektronikmodul der Zähleinrichtung ein zusätzliches Bluetooth-Modul umfassen, mit dem sich dieses mit einem tragbaren Computer verbindet. In vorteilhafter Weise ist auch die Verwendung der Near Field Communication (NFC) denkbar, bei der sich der tragbare Computer beim Annähern automatisch verbindet.

Vorzugsweise ist dem Elektronikmodul der Vorrichtung zur Wasseraufbereitung eine eindeutige Kennung zugeordnet, so dass der Benutzer in seinem Smartphone eine eindeutige Zuordnung seiner eigenen Vorrichtung zur Aufbereitung von Wasser vorfindet.

Bei einer Weiterbildung ist die aufbereitete Wassermenge mittels drahtloser Übertragung auf dem tragbaren Computer darstellbar. Denkbar ist insbesondere, die aufbereitete Wassermenge zeitbasiert, also beispielsweise nach Tagen, Stunden, Wochen oder Monaten, darzustellen. Hierdurch kann dem Benutzer auch signalisiert werden, welche Menge Wasser er getrunken hat.

Weiter können über ein Programm auf dem Computer zahlreiche weitere Funktionalitäten ermöglicht werden, wie beispielsweise ein automatisiertes Bestellen von Filterpatronen.

Die Zähleinrichtung ist in den Deckel einer Kanne eingesetzt.

Gemäß der Erfindung umfasst die Vorrichtung zur Aufbereitung von Wasser Mittel, um die drahtlose Übertragung temporär einzuschalten.

Das Elektronikmodul der Vorrichtung zur Aufbereitung von Wasser umfasst eigene Mittel zur Stromversorgung, wie beispielsweise Batterien oder Akkus.

Um diese zu schonen ist es gemäß der Erfindung vorgesehen, dass die Vorrichtung nur zeitweise ein Funksignal aufbaut, um mit einem in der Nähe befindlichen tragbaren Computer eine Verbindung aufzubauen. So lässt sich beispielsweise auch realisieren, dass das Elektronikmodul mittels in einem verschweißten Gehäuse angeordneter Batterien betrieben wird, diese aber eine derart lange Nutzungsdauer aufweisen, dass ein Austausch durch den Benutzer nicht erforderlich ist.

Weiter ist auch denkbar, die Energieversorgung des Elektronikmoduls aufzuladen, insbesondere induktiv.

Ein derartig notwendiges Aufladen kann beispielsweise ebenfalls über den tragbaren Computer signalisiert werden.

Die Offenbarung betrifft des weiteren eine Vorrichtung zur Aufbereitung von Wasser mit einem Wassersammelraum, einer Filterpatrone sowie einer Zähleinrichtung zur Anzeige eines erforderlichen Wechsels der Filterpatrone.

Gemäß der Erfindung umfasst die Zähleinrichtung Mittel zur drahtlosen Übertragung, um mit einem Smartphone zu kommunizieren, wobei die Zähleinrichtung mit einem Modul des Smartphones zur Positionsbestimmung zusammenwirkt.

Im Konkreten betritt die Erfindung die Verwendung des GPS-Moduls eines Smartphones in Verbindung mit einer Zähleinrichtung einer Wasseraufbereitungseinrichtung.

Über die Position des Smartphones können beispielsweise Informationen zum vorhandenen Leitungswasser, beispielsweise zum Härtegrad, automatisch an die Zähleinrichtung übertragen und bei der Berechnung der Lebensdauer der Filterpatrone berücksichtigt werden. So zählt die Zähleinrichtung in Abhängigkeit vom Standort, also bei einem Standort mit hartem Wasser schneller und bei einem Standort mit weichem Wasser langsamer. Die Wasserhärte wird dabei vorzugsweise über einen Server, der über das Internet mit dem Smartphone verbunden ist, abgerufen.

Denkbar ist auch, über die Positionsbestimmung dem Benutzer auf seinen tragbaren Computer individuelle Informationen zu an seinem Standort zur Verfügung stehenden Wasser zukommen zu lassen.

Die Offenbarung betrifft ein System, welches die vorstehend beschriebene Vorrichtung zur Aufbereitung von Wasser sowie ein Smartphone mit einer Anzeige eines erforderlichen Wechsels einer Filterpatrone umfasst.

Vorzugsweise ist auf einfache Weise die Zähleinrichtung über den tragbaren Computer rücksetzbar. Das Rücksetzen erfolgt mithin mittels einer drahtlosen Verbindung und es kann auf einen Rücksetzknopf auf dem Elektronikmodul der Zähleinrichtung verzichtet werden.

Weiter ist die Zähleinrichtung über das Smartphone in einen Ruhemodus versetzbar, indem diese nicht weiter zählt.

Dies ist von Vorteil, wenn der Benutzer für einen längeren Zeitraum, etwa im Urlaub, die Vorrichtung zur Wasseraufbereitung nicht verwendet. In diesem Zeitraum kann das Weiterzählen, welches insbesondere zumindest auch auf Basis der Zeit seit dem Einsetzen einer neuen Filterpatrone erfolgt, ausgesetzt werden.

Bei einer Weiterbildung der Erfindung umfasst das System des weiteren einen Server, welcher mit dem tragbaren Computer verbunden ist, beispielsweise über das Internet. Über den Server kann zentral erfasst werden, wann der Benutzer neue Filterpatronen benötigt. Dies kann sodann dem Benutzer auf den tragbaren Computer dargestellt werden. Weiter ist denkbar, den Standort des tragbaren Computers an den Server zu übertragen, so dass wiederum vom Server standortspezifische Informationen, beispielsweise zum Härtegrad des Wassers oder möglicherweise zu erwartenden Verunreinigungen etc., übertragen werden können.

### Beschreibung der Zeichnungen

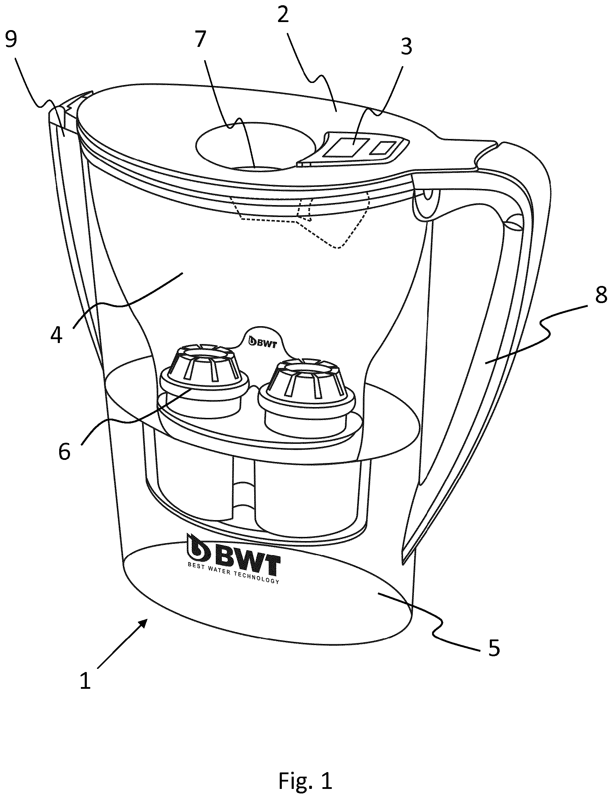

Die Erfindung soll im folgenden bezugnehmend auf die Zeichnungen Fig. 1 bis Fig. 6 näher beschrieben werden.

Fig. 1 zeigt ein Ausführungsbeispiel einer Vorrichtung zur Aufbereitung von Wasser 1, welche als Kanne ausgebildet ist.

Die Kanne umfasst einen Wassersammelraum 5 sowie einen Griff 8 und einen Ausguss 9.

Weiter umfasst die Kanne einen Deckel 2, welcher ein Schließelement 7 aufweist, das in dieser Ansicht geschlossen ist.

Bei dieser Ausführungsform der Erfindung wird das Schließelement 7 durch den Druck des einströmenden Wassers geöffnet. Die Erfindung bezieht sich aber auch auf anders ausgebildete Schließelemente, beispielsweise solche, die manuell geöffnet werden.

Über die durch das Schließelement 7 freigegebene Öffnung läuft Wasser in einen Trichter 4, welcher in die Kanne eingesetzt ist.

In den Trichter 4 ist eine Filterpatrone 6 eingesetzt, welche dem Aufbereiten des Wassers dient, das sich nach Passieren der Filterpatrone 6 im Wassersammelraum 5 sammelt. Derartig ausgestaltete Vorrichtungen zur Aufbereitung von Wasser sind vom Grundprinzip her bekannt.

Weiter umfasst die Vorrichtung zur Aufbereitung von Wasser 1 eine Zähleinrichtung 3, welche als in den Deckel 2 eingesetztes Elektronikmodul ausgebildet ist.

Über die Zähleinrichtung 3 wird ein notwendiger Austausch der Filterpatrone 6 angezeigt.

Hierzu kann die Zähleinrichtung 3 mit einem Timer (nicht dargestellt) zusammenwirken, welcher rein zeitbasiert, also beispielsweise nach Ablauf von einem Monat, einen notwendigen Austausch signalisiert.

Weiter ist ebenfalls denkbar, dass die Zähleinrichtung 3 mit dem Schließelement 7 zusammenwirkt und anhand der Anzahl der Öffnungs- und Schließvorgänge auf die Menge des aufbereiteten Wassers schließt.

Erfindungsgemäß umfasst die als Elektronikmodul ausgebildete Zähleinrichtung 3 Mittel zur drahtlosen Verbindung mit einem tragbaren Computer, insbesondere mit einem Smartphone, wie im folgenden noch im Detail dargestellt wird.

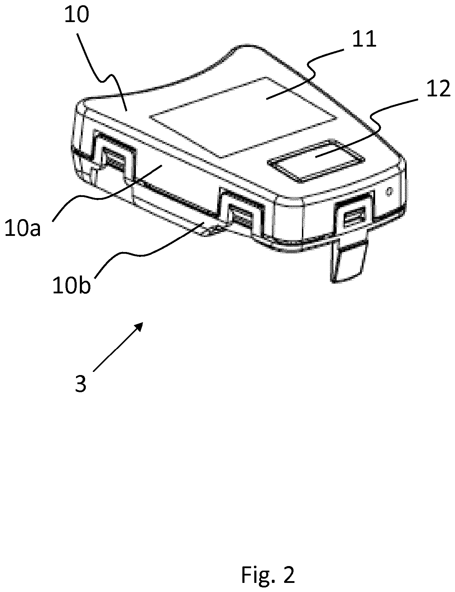

Fig. 2 zeigt eine perspektivische Ansicht der Zähleinrichtung 3, welche in den in Fig. 1 dargestellten Deckel eingesetzt werden kann.

Die Zähleinrichtung 3 ist als hermetisch verschlossenes Elektronikmodul ausgebildet und umfasst ein Gehäuse 10, welches aus einem Gehäuseoberteil 10a und einem Gehäuseunterteil 10b besteht.

Gehäuseoberteil 10a und Gehäuseunterteil 10b werden in diesem Ausführungsbeispiel zusammengeklipst. Um eine hermetisch dichte Verbindung bereitzustellen, können die Anstoßstellen vor der Montage mit einem Kleber versehen werden.

Auf der Oberseite der Zähleinrichtung 3 ist ein Display 11 sowie ein Reset-Schalter 12 angeordnet.

Das Display 11 liefert dem Benutzer Informationen über die Restlebensdauer der Filterpatrone.

Über den Reset-Schalter 12 kann der Benutzer die Zähleinrichtung nach Austausch der Filterpatrone in einen Ausgangszustand zurückversetzen.

Aufgrund der Mittel zur drahtlosen Verbindung mit einem tragbaren Computer ist aber auch denkbar, auf einen Reset-Schalter zu verzichten und das Rücksetzen ausschließlich über den tragbaren Computer und die drahtlose Verbindung vorzunehmen.

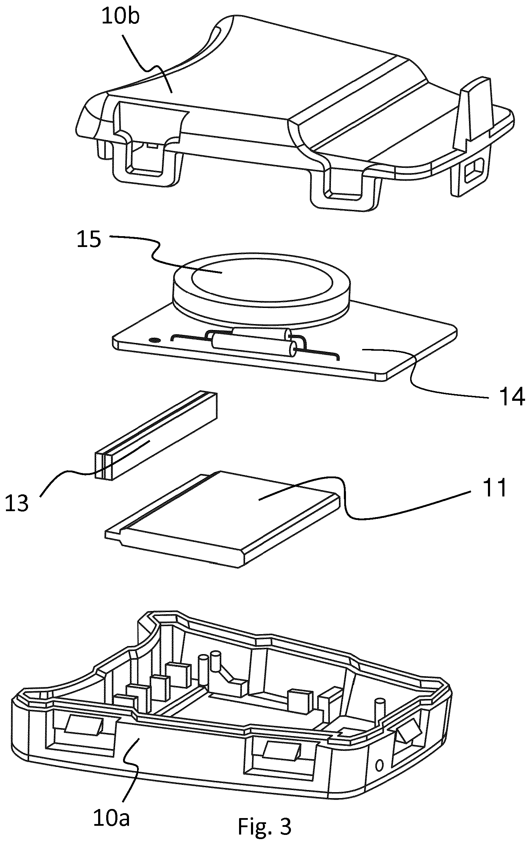

Fig. 3 zeigt eine Explosionsdarstellung der in Fig. 2 dargestellten Zähleinrichtung.

Zu erkennen ist das Gehäuseoberteil 10a sowie das Gehäuseunterteil 10b.

Das Gehäuseoberteil 10a weist ein Fenster auf, hinter welches das Display 11 gesetzt wird.

Weiter ist in das durch die Gehäusehälften 10a und 10b gebildete hermetisch verschlossene Elektronikmodul eine Leiterplatte 14 eingesetzt, in welcher sich bei diesem Ausführungsbeispiel die Elektronik der Zähleinrichtung einschließlich der Elektronik für die drahtlose Verbindung zu einem tragbaren Computer befindet. Dabei kann auf bekannte Standards, wie insbesondere Bluetooth, zurückgegriffen werden.

In einer alternativen Ausführungsform der Erfindung ist auch denkbar, die Elektronik derart aufzuteilen, dass ein standardisiertes Modul zur drahtlosen Übertragung, beispielsweise ein Bluetooth-Modul, vorhanden ist, welches kommerziell erhältlich ist und welches mit einer weiteren Platine elektrisch verbunden ist, auf welcher sich elektronische Komponenten der Zähleinrichtung befinden, welche beispielsweise das Display ansteuern.

Die Leiterplatte 14 ist über ein Kontaktpad 13 mit dem Display 11 verbunden. Leiterplatte 14, Kontaktpad 13 und Display 11 werden im zusammengesetzten Zustand durch die beiden Gehäusehälften derart eingeklemmt, dass auch ohne eine Lötverbindung allein über das Kontaktpad 13 ein elektrischer Kontakt sichergestellt ist.

Zur Energieversorgung ist auf der Leiterplatte 14 eine Batterie 15 montiert. Bei Verwendung einer nicht wieder aufladbaren Batterie sollte die drahtlose Verbindung nicht dauerhaft, sondern nur temporär hergestellt werden, um die Batterie 15 zu schonen.

Nach Erschöpfen der Batterie 15 ist die gesamte Zähleinrichtung 3 auszutauschen. Denkbar ist aber auch, ein mit einer Dichtung versehenes Batteriefach bereitzustellen, um diese austauschen zu können (nicht dargestellt).

Weiter ist denkbar, statt einer Batterie einen Akku zu verwenden, welcher beispielsweise induktiv aufgeladen werden kann. Es ist dabei insbesondere denkbar, den Ladezustand des Akkus auf einer Anzeige des mit der Zähleinrichtung verbundenen tragbaren Computers darzustellen.

Neben der Verwendung der Bluetooth-Funktechnologie ist insbesondere auch die Verwendung des NFC-Standards denkbar, bei welchem eine Verbindung zwischen den Geräten vollautomatisch beim Annähern derselben aufgebaut wird.

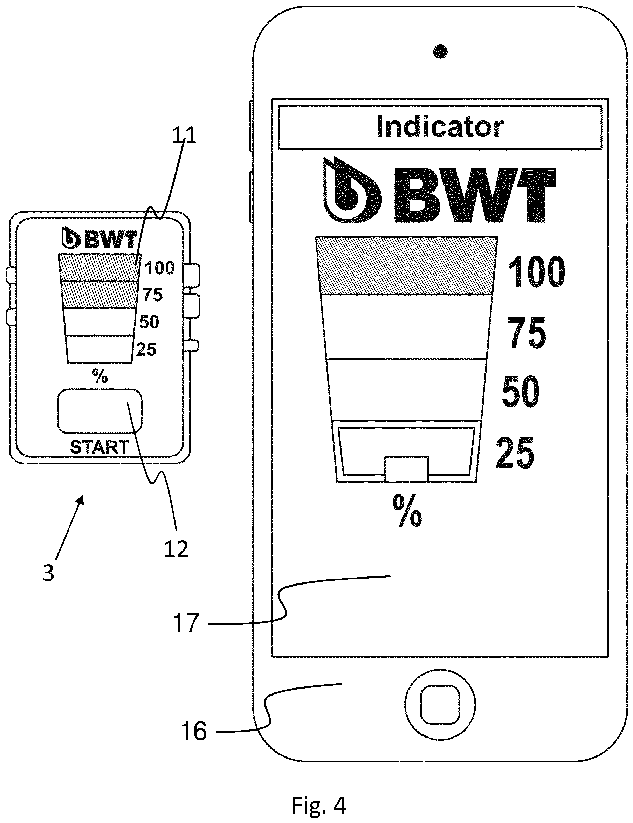

Fig. 4 zeigt eine Zähleinrichtung 3, welche mit einem Smartphone 16 eine Verbindung aufgebaut hat.

Zu erkennen ist das Display 11 der Zähleinrichtung 3, welches die Restlebensdauer der Filterpatrone in Prozentschritten anzeigt.

Weiter zu erkennen ist der Reset-Schalter.

Über ein auf dem Smartphone 16 vorhandenes Programm kann auf dem Display 17 des Smartphones 16 korrespondierend zum Display 11 der Zähleinrichtung 3 die Restlebensdauer der Filterpatrone angezeigt werden. Das Smartphone 16 braucht keine ständige Verbindung mit der Zähleinrichtung 3. Es ist insbesondere auch denkbar, dass die Zähleinrichtung 3 nur temporär eine Verbindung zum Smartphone 16 aufbaut, dass das Smartphone 16 aber intern beispielsweise zeitbasiert die Restlebensdauer der Filterpatrone 6 weiterzählt und sich nur ab und zu mit der Zähleinrichtung 3 synchronisiert.

Aufgrund der vielseitigen Programmiermöglichkeiten eines Smartphones 16 kann das Smartphone 16 genutzt werden, um die Zähleinrichtung 3 mit weiteren Funktionalitäten zu versehen.

So ist denkbar, dass das Smartphone 16 automatisiert auf einen notwendigen Kauf von Filterpatronen 6 hinweist oder diese unter Umständen sogar automatisiert über das Internet bestellt werden.

Weiter ist denkbar, das Smartphone 16 zu verwenden, um die Zähleinrichtung 3 zu steuern. So ist denkbar, dass über das Smartphone 16 die Zähleinrichtung 3 nach einem Tausch der Filterpatrone 6 rückgesetzt wird.

Weiter ist denkbar, über das Smartphone 16 die Zähleinrichtung 3 in einen Ruhemodus zu versetzen, in welchem das Weiterzählen gestoppt wird, beispielsweise, wenn der Benutzer in den Urlaub fährt.

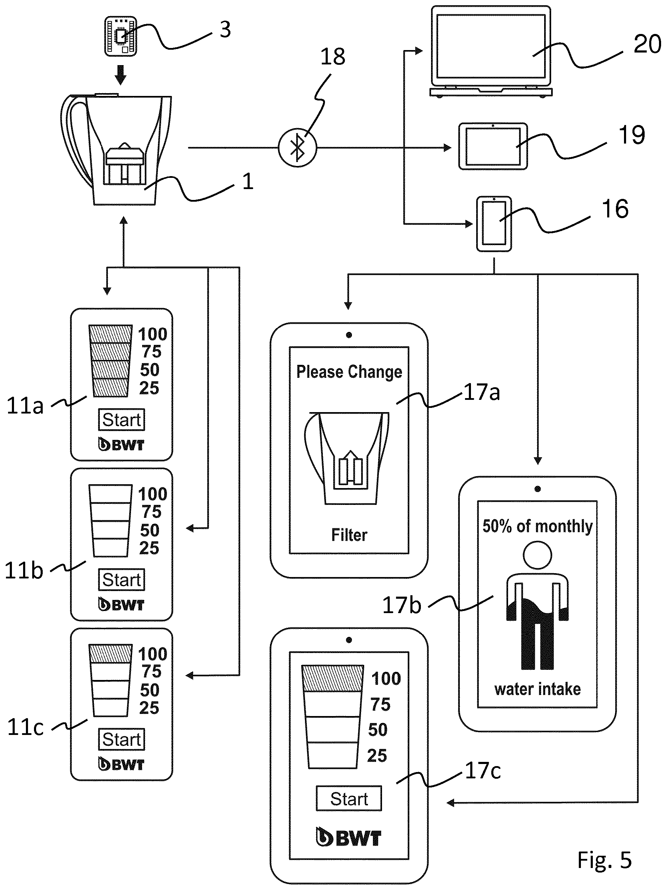

Fig. 5 zeigt schematisch die denkbare Einbindung des Smartphones 16, aber auch anderer tragbarer Computer, wie eines Tablets 19 oder eines Laptops 20, mittels einer Bluetooth-Verbindung 18 zur Zähleinrichtung 3, welche in den Deckel 2 der als Kanne ausgebildeten Vorrichtung zur Aufbereitung von Wasser 1 eingesetzt wird.

Zu erkennen ist, dass die Zähleinrichtung 3 die Restlebensdauer der Filterpatrone 6, hier in Prozentschritten, anzeigt.

Das Display 11a zeigt, dass die Filterpatrone 6 erschöpft ist.

Nach dem Einsetzen einer neuen Filterpatrone und Rücksetzen der Zähleinrichtung 3 zeigt, wie in 11b dargestellt, das Display wieder, dass die Filterpatrone nunmehr noch eine maximale Lebensdauer hat.

Sodann fängt, wie in 11c dargestellt, die Zähleinrichtung 3 wieder zu zählen an.

17a bis 17c zeigen denkbare Anzeigen auf dem Display 17 des Smartphones 16.

17a symbolisiert einen notwendigen Austausch der Filterpatrone 6. Dieser kann automatisiert bereits vor Erreichen des Lebensendes der Filterpatrone 6 erfolgen.

17c zeigt eine Anzeige über die Restlebensdauer der Filterpatrone 6, welche mit der Anzeige der Zähleinrichtung 3 korrespondiert.

Weiter ist denkbar, das Smartphone 16 oder einen anderen tragbaren Computer zur Auswertung und Information des Benutzers zu nutzen.

Hier beispielhaft dargestellt ist in 17b eine Anzeige, die dem Benutzer signalisiert, ob er eine empfohlene Wassermenge getrunken hat. Dies kann beispielsweise zeitbasiert nach Tagen, Wochen oder Monaten erfolgen.

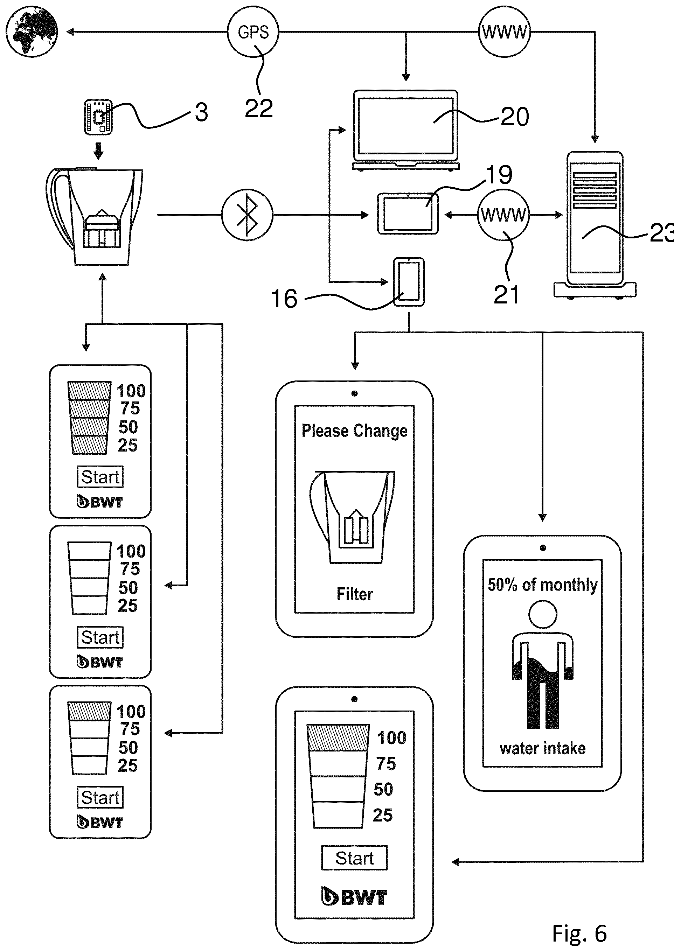

Fig. 6 basiert auf Fig. 5, wobei nunmehr zusätzlich ein Server 23 dargestellt ist, der über eine Internetverbindung mit den tragbaren Computern in Form eines Smartphones 16, Tablets 19 oder Laptops 20 verbunden ist.

Weiter sind die tragbaren Computer, insbesondere das Smartphone, mittels eines integrierten GPS-Moduls (nicht dargestellt) mit einem GPS-Satellitensystem zur Positionsbestimmung verbunden.

Das Smartphone 16 kommuniziert nunmehr mit dem Server 23, welcher beispielsweise auch unter Berücksichtigung der Positionsdaten des Smartphones 16 dem Benutzer individuelle Informationen, beispielsweise zur Wasserqualität, insbesondere zur Wasserhärte, liefern kann.

Denkbar ist aber auch, die Positionsdaten des GPS-Moduls zu verwenden, um die Zähleinrichtung 3 anzusteuern.

So können beispielsweise auf dem Server 23 Informationen zur Trinkwasserqualität gespeichert sein, welche in Abhängigkeit von den über die GPS-Verbindung vorhandenen Positionsdaten verwendet werden, um die Zähleinrichtung 3 zu steuern.

Beispielsweise ist denkbar, an Orten mit höherer Wasserhärte die Zähleinrichtung 3 schneller zählen zu lassen, also beispielsweise einen notwendigen Austausch nach einer geringeren Menge gefilterten Wassers oder nach einer kürzeren Zeit zu signalisieren.

Aufgrund der drahtlosen Verbindung kann ferner der tragbare Computer genutzt werden, um die Zähleinrichtung 3 zu konfigurieren oder zu programmieren. Es ist insbesondere denkbar, das Rücksetzen über den tragbaren Computer vorzunehmen oder die Zähleinrichtung 3 in einen Ruhemodus zu versetzen.

Durch die Erfindung konnte auf einfache Weise eine haushaltsübliche Vorrichtung zur Aufbereitung von Wasser mit weiteren Funktionalitäten versehen werden, welche insbesondere einen wesentlich erhöhten Komfort mit sich bringen.

### Bezugszeichenliste

- 1: Vorrichtung zur Aufbereitung von Wasser
- 2: Deckel
- 3: Zähleinrichtung
- 4: Trichter
- 5: Wassersammelraum
- 6: Filterpatrone
- 7: Schließelement
- 8: Griff
- 9: Ausguss
- 10: Gehäuse
- 10a: Gehäuseoberteil
- 10b: Gehäuseunterteil
- 11: Display
- 12: Reset-Schalter
- 13: Kontaktpad
- 14: Leiterplatte
- 15: Batterie
- 16: Smartphone
- 17: Display
- 18: Bluetooth-Verbindung
- 19: Tablet
- 20: Laptop
- 21: Internetverbindung
- 22: GPS-Verbindung
- 23: Server

## Patentansprüche

1. System, umfassend eine Vorrichtung zur Aufbereitung von Wasser (1) sowie ein Smartphone (16), wobei die Vorrichtung zur Aufbereitung von Wasser eine Kanne mit einem Wassersammelraum (5) umfasst,
welche einen Trichter (4) zum Einsetzen einer Filterpatrone (6) und einen Ausguss zum Ausgießen von Wasser aufweist,
sowie die Filterpatrone (6) umfasst, wobei die Vorrichtung eine Zähleinrichtung (3) zur Anzeige eines erforderlichen Wechsels der Filterpatrone (6) aufweist, welche in den Deckel (2) der Kanne eingesetzt ist,
wobei die Zähleinrichtung (3) Mittel zur drahtlosen Übertragung aufweist, mittels der eine Anzeige eines erforderlichen Wechsels der Filterpatrone (6) auf dem Display (17) eines Smartphones (16) darstellbar ist, wobei die Zähleinrichtung (3)mit einem Timer, einer Einrichtung zum Zählen der aufbereiteten Wassermenge und/oder einem Schließelement (7) zusammenwirkt, wobei die Mittel zur drahtlosen Übertragung in einem Elektronikmodul integriert sind, welches auch ein Display (11) zur Anzeige der Restlebensdauer der Filterpatrone (6) umfasst,
und wobei die Zähleinrichtung (3) mit einem Modul des Smartphones (16) zur Positionsbestimmung (22) zusammenwirkt, und wobei die Vorrichtung zur Aufbereitung von Wasser (1) Mittel aufweist, um nur temporär eine Verbindung zum Smartphone (16) aufzubauen, und wobei das Smartphone (16) Mittel aufweist, um die Zähleinrichtung (3) in einen Ruhemodus zu versetzen, in welchem das Weiterzählen gestoppt wird.

2. System nach dem vorstehenden Anspruch, **dadurch gekennzeichnet, dass** das System einen Server (23) umfasst, der über das Internet mit dem Smartphone (16) verbunden ist

3. System nach einem der vorstehenden Ansprüche, **dadurch gekennzeichnet, dass** das Elektronikmodul hermetisch verschlossen ist.

4. System nach einem der vorstehenden Ansprüche, **dadurch gekennzeichnet, dass** die Vorrichtung Mittel zum Zählen der aufbereiteten Wassermenge aufweist, wobei die aufbereitete Wassermenge mittels drahtloser Übertragung auf dem Smartphone darstellbar ist.

5. System nach dem vorstehenden Anspruch, **dadurch gekennzeichnet, dass** die aufbereitete Wassermenge auf Basis der Öffnungsvorgänge eines Schließelementes (7) bestimmbar ist, welches zum Einfüllen von Wasser geöffnet wird.

## Claims

1. A system comprising a device for treating water (1) and a smartphone (16), wherein the device for treating water comprises a jug having a water collection cavity (5)
which includes a funnel (4) for inserting a filter cartridge (6) and a spout for pouring out water;
and comprising the filter cartridge (6), wherein the device comprises a counting device (3) for indicating a required replacement of the filter cartridge (6), which counting device is accommodated in the lid (2) of the jug;
wherein the counting device (3) includes means for wireless transmission, which allow to present an indication of a required replacement of the filter cartridge (6) on the display (17) of a smartphone (16), wherein the counting device (3) cooperates with a timer, with a means for counting the amount of treated water and/or with a closing element (7), wherein the means for wireless transmission are integrated in an electronic module which likewise comprises a display (11) for indicating the remaining service life of the filter cartridge (6);
and wherein the counting device (3) cooperates with a module of the smartphone (16) for position determination (22); and wherein the device for treating water (1) comprises means for establishing a connection to the smartphone (16) only temporarily; and wherein the smartphone (16) comprises means for putting the counting device (3) to a sleep mode during which further counting is stopped.

2. The system according to the preceding claim, **characterized in that** the system comprises a server (23) which is connected to the smartphone (16) via the Internet.

3. The system according to any one of the preceding claims, **characterized in that** the electronic module is hermetically sealed.

4. The system according to any one of the preceding claims, **characterized in that** the device comprises means for counting the amount of treated water, wherein the amount of treated water can be displayed on the smartphone via wireless transmission.

5. The system according to the preceding claim, **characterized in that** the amount of treated water can be determined on the basis of the opening operations of a closing element (7) which is opened for filling in water.

## Revendications

1. Système comprenant un dispositif de traitement de l'eau (1) ainsi qu'un smartphone (16), dans lequel le dispositif de traitement de l'eau comprend une carafe ayant une cavité de collecte d'eau (5),
qui comprend un entonnoir (4) pour insérer une cartouche filtrante (6) et un bec verseur pour verser de l'eau,
et comprenant la cartouche filtrante (6), le dispositif comprenant un dispositif de comptage (3) pour indiquer le remplacement nécessaire de la cartouche filtrante (6), ce dispositif de comptage étant logé dans le couvercle (2) de la carafe,
dans lequel le dispositif de comptage (3) comprend des moyens de transmission sans fil, grâce auxquels une indication du remplacement nécessaire de la cartouche filtrante (6) peut être présenté sur l'écran (17) d'un smartphone (16), dans lequel le dispositif de comptage (3) coopère avec une minuterie, avec un dispositif de comptage de la quantité d'eau traitée et/ou avec un élément de fermeture (7), dans lequel les moyens de transmission sans fil sont intégrés dans un module électronique qui comprend également un écran (11) pour l'affichage de la durée de vie restante de la cartouche filtrante (6),
et dans lequel le dispositif de comptage (3) coopère avec un module du smartphone (16) pour la détermination de position (22), et dans lequel le dispositif de traitement de l'eau (1) comprend des moyens pour établir une connexion avec le smartphone (16) seulement de manière temporaire, et dans lequel le smartphone (16) comprend des moyens pour mettre le dispositif de comptage (3) dans un mode repos pendant lequel la poursuite du comptage est arrêtée.

2. Système selon la revendication précédente, **caractérisé en ce que** le système comprend un serveur (23) qui est connecté au smartphone (16) via l'Internet.

3. Système selon l'une quelconque des revendications précédentes, **caractérisé en ce que** le module électronique est hermétiquement fermé.

4. Système selon l'une quelconque des revendications précédentes, **caractérisé en ce que** le dispositif comporte des moyens de comptage de la quantité d'eau traitée, la quantité d'eau traitée pouvant être affichée sur le smartphone par transmission sans fil.

5. Système selon la revendication précédente, **caractérisé en ce que** la quantité d'eau traitée peut être déterminée sur la base des opérations d'ouverture d'un élément de fermeture (7) qui est ouvert pour le remplissage d'eau.
